# EUROPÄISCHE PATENTSCHRIFT

(11) **EP 0 760 974 B1**
(45) Veröffentlichungstag und Bekanntmachung des Hinweises auf die Patenterteilung: **17.10.2001**
(21) Anmeldenummer: 95920880.2
(22) Anmeldetag: 24.05.1995
(51) Int. Cl.: G05D 16/10

(54) **VORGESTEUERTES 3-WEGE-DRUCKMINDERVENTIL**
PRECONTROLLED THREE-WAY PRESSURE REDUCTION VALVE
SOUPAPE DE REDUCTION DE PRESSION A TROIS VOIES PILOTEE

(30) Priorität: 27.05.1994 DE 4418524
(43) Veröffentlichungstag der Anmeldung: 12.03.1997
(73) Patentinhaber: Mannesmann Rexroth Aktiengesellschaft, 97816 Lohr am Main (DE)
(72) Erfinder: CORDS, Karl, D-97846 Partenstein (DE); MACHAT, Götz-Dieter, D-97816 Lohr/Main (DE); MEYER, Karl-Josef, D-97794 Rieneck (DE); SCHULTE, Michael, D-97833 Frammersbach (DE); STROKA, Wilfried, D-97846 Partenstein (DE)
(86) Internationale Anmeldenummer: EP9501977
(87) Internationale Veröffentlichungsnummer: WO9533231

(56) Entgegenhaltungen:
- DE-A- 2 547 646
- DE-A- 3 125 143
- FR-A- 1 378 731
- FR-A- 2 444 968
- PIPPENGER J.J 'hydraulic cartridge valve technology' 1990 , AMALGAM PUBLISHING COMPANY , USA siehe Seite 142

## Beschreibung

Die Erfindung betrifft ein vorgesteuertes 3-Wege-Druckminderventil entsprechend dem Oberbegriff des Anspruchs 1.

Diese Druckminderventile neigen leicht zum Schwingen, weshalb zu deren Stabilisierung besondere Maßnahmen getroffen werden müssen. In bekannter Weise werden die Verbindungsöffnungen zwischen umlaufender Nut des Regelkolbens und dem Arbeitsflüssigkeitsraum über den Umfang in größerer Anzahl vorgesehen und in zwei Reihen angeordnet, damit eine gute Verteilung der Arbeitsflüssigkeit von der Nut in den mit dem Verbraucher in Verbindung stehenden Arbeitsflüssigkeitsraum und umgekehrt gewährleistet ist. Dies erfordert einen erheblichen Fertigungsaufwand für den als Hohlkolben mit einer Trennwand ausgebildeten Regelkolben.

Die Aufgabe der Erfindung besteht deshalb darin, ein weitgehend schwingungsfrei arbeitendes Druckminderventils bei geringem Fertigungsaufwand zu erzielen. Dies wird in überraschender Weise mit den Merkmalen des kennzeichnenden Teils des Anspruches 1 erreicht. Dadurch, daß der Arbeitsflüssigkeitsraum als T-Kanal ausgebildet ist, wird eine übermäßige Verwirbelung der Arbeitsflüssigkeit in diesem Raum weitgehend unterbunden, so daß aufgrund dieser gezielten Arbeitsflüssigkeitsführung ein hoher Grad an Stabilität während des Regelvorganges erzielbar ist. Ferner wird die Stabilität des Regelvorganges noch durch die besondere Ausbildung der dem Vorsteuerventil vorgeordneten Dämpfungsdrossel begünstigt. Die Ausbildung des T-Kanals des von dem Hauptsteuerkolben gebildeten Arbeitsflüssigkeitsraumes erfordert lediglich eine in eine Querbohrung mündende Längsbohrung.

Weitere Merkmale der Erfindung sind in den Unteransprüchen genannt und in der nachfolgenden Beschreibung eines Ausführungsbeispiels der Erfindung näher erläutert.

Das in Patronenbauweise ausgebildete vorgesteuerte 3-Wege-Druckminderventil weist eine das Gehäuse bildende Hülse 1 auf, die mit einem Gewinde 1a in ein Muttergewinde eines Aufnahmegehäuses 31 mittels eines Dichtungsringes 32 flüssigkeitsdicht eingeschraubt ist. Das Aufnahmegehäuse 31 weist Kanäle 33 und 34 auf, die mit umlaufenden Nuten 36 und 37 des hülsenförmigen Gehäuses 1 in Flüssigkeitsverbindung stehen. Der Kanal 33 steht mit dem Pumpenanschluß und der Kanal 34 mit dem Tankanschluß in Verbindung. Die umlaufenden Nuten 36 und 37 sind durch einen Dichtungssteg 40 mit Dichtungsring 41 voneinander getrennt. Der weitere Dichtungsring 43 dichtet die umlaufende Nut 36 gegen den Verbraucheranschluß 45 ab. Der Bohrungsabschnitt 46 der Gehäusehülse 1 ist als zylindrische Führung für den Regelkolben 47 ausgebildet. Der Regelkolben weist eine Trennwand 48 auf, die den Arbeitsflüssigkeitsraum 49 vom Steuerraum 50 trennt. Im mittleren Bereich weist die Trennwand eine Drosselbohrung 51 auf, durch die Steuerflüssigkeit aus dem Arbeitsflüssigkeitsraum 49 in den Steuerraum 50 strömt. Der Arbeitsflüssigkeitsraum 49 ist T-förmig ausgebildet, und zwar bestehend aus einer Querbohrung 53, in der eine Axialbohrung 54 mündet. Die Querbohrung 53 mündet in eine umlaufende Nut 56, deren Begrenzungswände 56a, 56b Steuerkanten bilden, die mit Radialbohrungen 58 und 59 in der Gehäusehülse 1 zusammenarbeiten.

Bei dem vorliegenden Ausführungsbeispiel sind beispielsweise sechs Radialbohrungen 58 und sechs Radialbohrungen 59 gleichmäßig um den Umfang der Hülse 1 verteilt angeordnet. Die Radialbohrungen 58 stehen mit der umlaufenden Nut 36 in Verbindung, die ihrerseits mit dem Pumpenkanal 33 verbunden ist. Die Radialbohrungen 59 münden in die umlaufende Nut 37, die ihrerseits mit dem Tankkanal 34 verbunden ist.

In der dargestellten Lage des Regelkolbens ist der Verbraucheranschluß 45 über die T-förmige Ausnehmung 53, 54 der umlaufenden Nut 56, den Radialbohrungen 58 der umlaufenden Nut 36 mit dem Pumpenkanal 33 verbunden. Über die Drosselbohrung 51 in der Trennwand 48 des Regelkolbens wirkt im Steuerraum 50 der gleiche Druck wie im Arbeitsflüssigkeitsraum 49. Dieser Druck wirkt nun seinerseits über eine Dämpfungsdrossel 60 auf den Verschlußkörper 61 des Vorsteuerventils VV. Der Verschlußkörper 61 ist kugelförmig ausgebildet und wird über den Federteller 63 von der Druckfeder 64 auf die Sitzfläche 65 gedrückt. Die Einstellung der Vorspannung der Druckfeder 64 erfolgt durch den hohl ausgebildeten Einschraubkörper 67, an dem sich das eine Ende der Druckfeder 64 abstützt. Der Einschraubkörper 67 weist ein Schraubgewinde 68 auf, das in ein Muttergewinde 69 der Gehäusehülse 1 form- und kraftschlüssig eingreift. Die Einstellung der Vorspannung, die von der Einschraubtiefe des Einschraubkörpers festgelegt ist, wird durch die Kontermutter 70 gesichert, die auf ein weiteres Gewinde 71 des Einschraubkörpers 67 aufgeschraubt und gegen die obere Stirnfläche 73 der Gehäusehülse 1 fest aufgezogen ist. Der Ventil- bzw. Federraum 75 des Vorsteuerventils ist über einen schräg verlaufenden Kanal 76 in der Gehäusehülse 1 mit dem Tankkanal 34 des Aufnahmegehäuses 31 verbunden. Nach außen ist der Ventilraum 75 durch Dichtungsringe 77 abgedichtet. Eine Haube 80 schützt und sichert den Einschraubköprer 67 vor Fremdeinflüssen.

Die zwischen Vorsteuerventil VV und Steuerraum 50 vorgesehene Dämpfungsdrossel 60 ist als Einschraubkörper mit einem zylindrischen Kopfteil 60a ausgebildet. Die Drosselbohrung hat einen T-förmigen Verlauf und wird von einer Querbohrung 60b im Kopfteil 60a und Axialbohrung 60c gebildet. Durch die T-förmige Ausbildung der Drosselbohrung wird die Steuerflüssigkeit, bevor sie auf den Schließkörper 61 auftrifft, um 90° umgelenkt und damit ein weiterer Dämpfungseffekt erzielt. Dieser Dämpfungseffekt wird noch dadurch begünstigt, daß die Steuerflüssigkeit zunächst dem Ringraum 58a zwischen dem Kopfteil 60a der Dämpfungsdrossel und der Begrenzungswand 50b des Steueraumes 50 passieren muß, bevor sie in die Querbohrung 60b der Dämpfungsdrossel eintritt. Durch das eine Federende 8a der den Regelkolben 47 in Richtung des Anschlusses 45 beaufschlagenden Druckfeder 8, das in diesem Ringraum 58a liegt und damit diesen Raum zusätzlich verengt, wird ein zusätzlicher Dämpfungseffekt erzielt.

Sobald der an der Druckfeder 64 eingestellte Öffnungsdruck des Vorsteuerventils VV erreicht ist, hebt sich der Schließkörper 61 gegen die Kraft der Feder 64 von seiner Sitzfläche 65 ab und stellt eine Verbindung über die Dämpfungsdrossel 60 zwischen Steuerraum 50 und Ventil- bzw. Federraum 75 des Vorsteuerventils her. Die damit in den Ventilraum 75 einströmende Steuerflüssigkeit wird über den Kanal 76 dem Tankkanal 34 zurückgeführt. Sobald das Vorsteuerventil VV öffnet und sich der Druck im Arbeitsflüssigkeitsraum 49 weiter erhöht, verschiebt sich der Regelkolben 47 in Richtung des Steuerraumes 50 bis die Steuerkante 56a der umlaufenden Nut den Arbeitsflüssigkeitsraum 49 mit den Radialbohrungen 59, die über den Tankkanal 34 mit dem Tank verbunden sind, verbindet. Durch diese Verbindung wird über den Arbeitsflüssigkeitsraum 49 verbraucherseitig soviel Arbeitsflüssigkeit zum Tank geleitet bis der Druck dem am Vorsteuerventil VV eingestellten Druck entspricht. Sobald dieser Druck erreicht ist, schließt das Vorsteuerventil und durch das damit am Regelkolben über die Drosselbohrung 51 sich wieder einstellende Druckgleichgewicht wird der Regelkolben durch die an diesem wirkende geringe Kraft der Regelfeder 8 wieder in Richtung des Verbraucheranschlusses 45 verschoben und unterbricht hierbei die Verbindung zwischen Arbeitsflüssigkeitsraum 49 und den mit dem Tank in Verbindung stehenden Radialbohrungen 59. Der axiale Abstand der Steuerkanten 56a, 56b ist geringfügig kleiner als der axiale Abstand der Radialbohrungen 58, 59, so daß bei Erreichen des am Vorsteuerventil eingestellten Druckes der Steuerkolben mit der umlaufenden Nut 56 zwischen den beiden Radialbohrungsreihen liegt. Sobald eine Druckänderung verbraucherseitig auftritt, verschiebt sich der Regelkolben 47 entweder in die eine oder andere Richtung und verbindet über die Steuerkanten 56a, 56b die Verbraucherseite 45 über die Radialbohrungen 58, 59 in der Gehäusehülse 1 entweder mit dem Tank (bei Druckanstieg) oder mit der Pumpe (bei Druckabfall). Während dieses Regelvorganges treten nennenswerte Schwingungen am Regelkolben 47 nicht auf, da auf der Verbraucherseite auftretende Druckspitzen durch die besondere Ausbildung des Regelkolbens und der Dämpfungsdrossel weitgehend abgefangen werden und damit dem Vorsteuerbereich gar nicht erst erreichen.

Die während des Regelvorganges über den Steuerraum 50 sowie den Ventilraum 75 und den Verbindungskanal 76 zum Tank abströmende Steuerflüssigkeitsmenge wird durch die Querschnittsgröße der Drosselbohrung 51 festgelegt. Um der Verschmutzungsgefahr vorzubeugen, weist die Düse bzw. die Drosselbohrung 51 einen Durchmessser von ca. 0,7 mm auf, während die Dämpfungsdrossel 60 einen Durchmesser von ca. 0,9 mm hat.

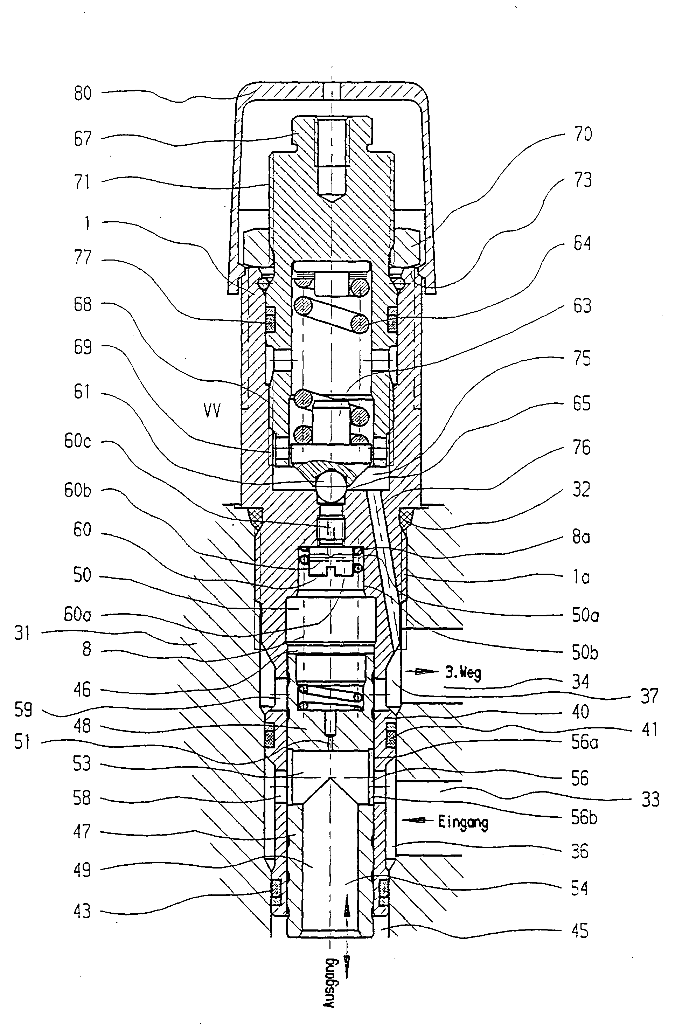

## Patentansprüche

1. Vorgesteuertes 3-Wege-Druckminderventil in Patronenbauweise
mit einem hohlen Regelkolben (47),
der eine Trennwand (48) aufweist,
die einen Arbeitsflüssigkeitsraum (49) von einem Steuerraum (50) trennt
und in der eine den Steuerflüssigkeitsraum (50) mit dem Arbeitsflüssigkeitsraum (49) verbindende Düse (51) angeordnet ist,
der eine im Steuerbereich umlaufende Nut (56) aufweist, deren axiale Begrenzungswände (56a, 56b) Steuerkanten bilden,
die mit Radialbohrungen (58, 59) einer Führungsbüchse (1) zusammenwirken,
und die mit dem Arbeitsflüssigkeitsraum (49) über radiale Ausnehmungen (53) im Nutbereich des Regelkolbens (47) in Verbindung steht,
und der von einer im Steuerflüssigkeitsraum (50) angeordneten Feder (8) in Öffnungsrichtung zur Pumpenseite hin belastet ist,
und mit einer Dämpfungsdrossel (60),
die zwischen dem von einer Kraft (64) belasteten, mit dem Ventilsitz (65) zusammenwirkenden Schließkörper (61) eines Vorsteuerventils (VV) und dem Steuerflüssigkeitsraum (50) vorgesehen ist,
**dadurch gekennzeichnet,**
**daß** der Arbeitsflüssigkeitsraum (49) von einer T-förmigen Ausnehmung im Regelkolben (47) gebildet ist, wobei eine Axialbohrung (54) in eine Querbohrung (53) mündet und beide Bohrungen annähernd gleichen Durchmesser aufweisen, und daß die Breite der umlaufenden Nut (56) geringfügig größer ist als der Durchmesser der in diese Nut mündenden Querbohrung (53).

2. Vorgesteuertes 3-Wege-Druckminderventil nach Anspruch 1, **dadurch gekennzeichnet, daß** zwischen dem von einer Kraft (64) belasteten, mit dem Ventilsitz (65) zusammenwirkenden Schließkörper (61) eines Vorsteuerventils (VV) und dem Steuerflüssigkeitsraum (50) eine Dämpfungsdrossel (60) vorgesehen ist und daß die Dämpfungsdrossel (60) eine rechtwinklige Kanalführung (60b, 60c) aufweist.

3. Vorgesteuertes 3-Wege-Druckminderventil nach Anspruch 1, **dadurch gekennzeichnet, daß** zwischen dem von einer Kraft (64) belasteten, mit dem Ventilsitz (65) zusammenwirkenden Schließkörper (61) eines Vorsteuerventils (VV) und dem Steuerflüssigkeitsraum (50) eine Dämpfungsdrossel (60) vorgesehen ist und daß die Dämpfungsdrossel (60) eine T-förmige Kanalführung (60b, 60c) aufweist.

4. Vorgesteuertes 3-Wege-Druckminderventil nach Anspruch 3, **dadurch gekennzeichnet, daß** die Axialbohrung (60c) der Dämpfungsdrossel (60) in Richtung des Vorsteuerventils (VV) weist und die Querbohrung (60b) der Dämpfungsdrossel (60) im Steuerflüssigkeitsraum (50) liegt.

5. 3-Wege-Druckminderventil nach den Ansprüchen 3 und 4, **dadurch gekennzeichnet, daß** die Dämpfungsdrossel (60) als Einschraubkörper mit einem die Querbohrung (60b) aufweisenden zylindrischen Kopfteil (60a) ausgebildet ist, wobei zwischen Kopfteil (60a) und dem Steuerflüssigkeitsraum (50) ein Ringraum (50a) zur Aufnahme des einen Endteils (8a) der den Regelkolben (47) belastenden Feder (8) vorsehen ist.

## Claims

1. A pilot operated three-way pressure reduction valve of cartridge construction
with a hollow control piston (47)
having a partition (48),
which separates a working fluid chamber (49) from a control chamber (50),
and in which is arranged a restrictor (51) connecting the control fluid chamber (50)
with the working fluid chamber (49);
having, in the control region, a surrounding groove (56) the axial limiting walls (56a, 56b) of which form control edges,
which cooperate with radial bores (58, 59) of a guide bushing (1),
the said surrounding groove being in communication with the working fluid chamber (49) via radial recesses (53) in the region of the groove of the control piston (47);
and which is urged in opening direction towards the pump side by a spring (8) arranged in the control fluid chamber (50);
and with a damping choke (60)
which is provided between the closure member (61) of a pilot valve (VV), which member is acted on by a force (64) and cooperates with the valve seat (65), and the control fluid chamber (50),
**characterized in that**
the working fluid chamber (49) is formed by a T-shaped cavity in the control piston (47), an axial bore (54) debouching into a transverse bore (53) and the two bores having approximately the same diameter, the width of the surrounding groove (56) being slightly greater than the diameter of the transverse bore (53) debouching into said groove.

2. A pilot operated three-way pressure reduction valve according to Claim 1, **characterized in that** between the closure member (61) of a pilot valve (VV), which member is acted on by a force (64) and cooperates with the valve seat (65), and the control fluid chamber (50) a damping choke (60) is provided, and that the damping choke (60) has a right-angle channel guide (60b, 60c).

3. A pilot operated three-way pressure reduction valve according to Claim 1, **characterized in that** between the closure member (61) of a pilot valve (VV), which member is acted on by a force (64) and cooperates with the valve seat (65), and the control fluid chamber (50) a damping choke (60) is provided, and that the damping choke (60) has a T-shaped channel guide (60b, 60c).

4. A pilot operated three-way pressure reduction valve according to Claim 3, **characterized in that** the axial bore (60c) of the damping choke (60) points in the direction of the pilot valve (VV), and that the transverse bore (60b) of the damping choke (60) lies in the control fluid chamber (50).

5. A three-way pressure reduction valve according to Claims 3 and 4, **characterized in that** the damping choke (60) is developed as a screw-in member having a cylindrical head part (60a) provided with the transverse bore (60b), an annular space (50a) to receive the one end part (8a) of the spring (8) acting on the control piston (47) being provided between the head part (60a) and the control fluid chamber (50).

## Revendications

1. Un réducteur de pression piloté à 3 voies sous forme de cartouche, doté d'un tiroir (47) de régulation creux,
qui présente une cloison (48) de séparation,
laquelle sépare une chambre (49) de fluide de travail d'une chambre (50) de pilotage
et dans laquelle est disposé un gicleur (51) raccordant la chambre (50) de pilotage à la chambre (49) de fluide de travail, qui dans la zone de commande présente une rainure (56) périphérique,
dont les parois (56a, 56b) axiales de délimitation forment des arêtes de commande,
agissant de pair avec des alésages (58, 59) radiaux dans une douille (1) de commande,
et laquelle est raccordée à la chambre (49) de fluide de travail par des évidements (53) radiaux au niveau de la rainure du tiroir (47) de régulation,
et qui est sollicité dans le sens de l'ouverture vers le côté pompe par un ressort (8), disposé dans la chambre (50) de fluide de pilotage, et doté d'un étranglement (60) amortissement,
qui est disposée entre l'élément (61) de fermeture d'une valve (VV) de pilotage, lequel est soumis à une force (64) et lequel agit de pair avec le siège (65) de clapet, et la chambre (50) de fluide de pilotage,
**caractérisé en ce que**
la chambre (49) de fluide de travail est constituée d'un évidement en forme de T dans le tiroir (47) de régulation, cependant qu'un alésage (54) axial débouche dans un alésage (53) transversal et que les deux alésages présentent à peu près le même diamètre, et que la largeur de la rainure (56) périphérique est légèrement supérieure au diamètre de l'alésage (53) transversal, qui débouche dans cette rainure.

2. Un réducteur de pression piloté à 3 voies conforme à la revendication n° 1, **caractérisé en ce que** un étranglement (60) d'amortissement est prévu entre l'élément (61) de fermeture d'une valve (VV) de pilotage, lequel est soumis à une force (64) et agit de pair avec le siège (65) de clapet, et la chambre (50) de fluide de pilotage et que l'étranglement (60) d'amortissement présente un tracé de canal (60b, 60c) à angle droit.

3. Un réducteur de pression piloté à 3 voies conforme à la revendication n° 1, **caractérisé en ce que** un étranglement (60) d'amortissement est prévu entre l'élément (61) de fermeture d'une valve (VV) de pilotage, lequel est soumis à une force (64) et agit de pair avec le siège (65) de clapet, et la chambre (50) de fluide de pilotage et que l'étranglement (60) d'amortissement présente un tracé de canal (60b, 60c) en forme de T.

4. Un réducteur de pression piloté à 3 voies conforme à la revendication n° 3, **caractérisé en ce que** l'alésage (60c) axial de l'étranglement (60) d'amortissement pointe dans la direction de la valve (VV) de pilotage et l'alésage (60b) transversal de l'étranglement (60) d'amortissement est situé dans la chambre (50) de fluide de pilotage.

5. Un réducteur de pression piloté à 3 voies conforme aux revendications n° 3 et n° 4, **caractérisé en ce que** l'étranglement (60) d'amortissement est conçu sous forme d'élément à visser avec une partie tête (60a) cylindrique, présentant l'alésage (60b) transversal, cependant qu'entre la partie tête (60a) et la chambre (50) de fluide de pilotage est prévue une chambre (50a) annulaire, destinée à recevoir l'une des extrémités (8a) du ressort (8), qui sollicite le tiroir (47) de régulation.
